# EUROPEAN PATENT APPLICATION

(11) **EP 3 640 493 A1**
(43) Date of publication of application: **22.04.2020**
(21) Application number: 18818556.5
(22) Date of filing: 14.06.2018
(51) Int. Cl.: F16D 65/092, C22C 32/00, F16D 69/02

(54) **FRICTION MEMBER, DISC BRAKE PAD, AND AUTOMOBILE**

(30) Priority: 14.06.2017 JP 2017116749; 28.12.2017 WO PCT/JP2017/047346
(71) Applicant: Hitachi Chemical Company, Ltd., Chiyoda-ku Tokyo 100-6606 (JP)
(72) Inventor: UNNO, Mitsuo, Tokyo 100-6606 (JP); TAKAHASHI, Yoshihisa, Tokyo 100-6606 (JP); TOYODA, Hajime, Tokyo 100-6606 (JP)
(74) Representative: Hoffmann Eitle
(86) International application number: PCT/JP2018/022818
(87) International publication number: WO 2018/230672

(57) **Abstract**

Provided is a friction member (such as a disc brake pad) having light weight by reducing weight of a back plate and having improved durability after repeated braking. Specific examples of the friction member include a friction member having a friction material disposed on one surface of the back plate comprising a material having a lower specific gravity than that of steel, wherein heat conductivity in a thickness direction of the friction material is 0.40 W/m·K or less.

## Description

### Technical Field

The present invention relates to a friction member, a disc brake pad, and an automobile.

### Background Art

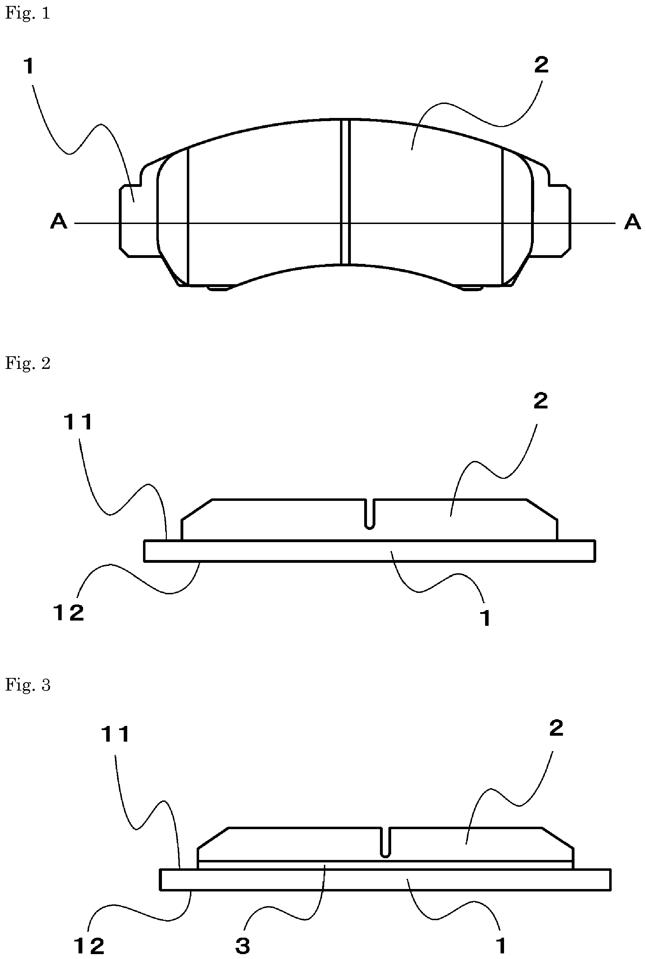

An example of a disc brake pad as a friction member for braking mounted on a two-wheeled vehicle, a four-wheeled vehicle, and the like is shown in Fig. 1 and Fig. 2. Fig. 1 is a top view of the disc brake pad, and Fig. 2 is an example of a cross-sectional view taken along a line A-A of Fig. 1. In this example, the disc brake pad is composed of a back plate 1 and a friction material 2, and the friction material 2 is directly and firmly fixed to one surface 11 of the back plate 1 (an upper surface of the back plate 1 in this example). The friction material 2 is, for example, made of a so-called resin molded material containing a bonding material, an organic filler, an inorganic filler, and a fibrous base material. Such a disc brake pad is produced by stacking preformed products of the friction material containing a bonding material, an organic filler, an inorganic filler, and a fibrous base material on one surface of the back plate 1 prior to hot press molding for integrally and firmly fixing them to each other, followed by a surface treatment.

Further, another example of the disc brake pad is shown in Fig. 3. Fig. 3 is another example of a cross-sectional view taken along the line A-A of Fig. 1. The disc brake pad in Fig. 3 is composed of a back plate 1, a friction material 2, and an interlayer 3, and the friction material 2 is firmly fixed to one surface 11 of the back plate 1 (an upper surface of the back plate 1 in this example) through the interlayer 3. In this case, the disc brake pad is produced by stacking preformed products of the friction material containing a bonding material, an organic filler, an inorganic filler, and a fibrous base material and the interlayer on one surface of the back plate 1 prior to hot press molding for integrally and firmly fixing them to each other, followed by a surface treatment.

With recent advances in an environmentally-friendly and fuel-efficient automobile, a weight reduction of automotive parts has been studied and put into practice. Although metallic materials generally make up more than half of the raw materials used for an automobile, an amount of the metallic materials used for automobiles has been slowly decreasing year by year due to a weight reduction of a car body. For reducing the weight of a car body, there has recently been a growing trend to use aluminum (an aluminum alloy or an aluminum composite) or a resin as a material. A steel plate has a specific gravity of approximately 7.8 Mg/m³, and aluminum and a resin, on the other hand, have a specific gravity of approximately 2.7 Mg/m³ and approximately 1 Mg/m³, respectively, and are therefore lighter than a steel plate. Thus, it is expected that the weight of a car body is reduced to 50% or less by using materials such as aluminum and a resin. In the movement of the weight reduction as described above, there has been a growing demand for the weight reduction of not only a body and a frame of a vehicle, but also the other elements composing a vehicle.

Such a demand for reducing the weight of a car body has also been growing in a disc brake pad which is one of the composing elements of braking system used for braking a vehicle. Specifically, although a back plate made of a steel plate material has been conventionally used for a disc brake pad, a resin-made back plate has recently been proposed. For example, a molded product produced by compressing a phenolic resin containing glass fibers of approximately 0.1 to 10 mm has been proposed (see PTLs 1 and 2).

### Citation List

### Patent Literature

PTL 1: JP 2001-165210 A
PTL 2: JP 2001-253998 A

### Summary of Invention

### Technical Problem

The present inventors conducted a study to replace the conventional steel back plate with a back plate made of a resin or an aluminum lightweight material for the weight reduction of the disc brake pad, and consequently found that these lightweight materials have insufficient durability as compared to that of the conventional steel back plate.

Based on the above, an object of the present invention is to provide a friction member (such as a disc brake pad) having light weight by reducing weight of a back plate with improved durability after repeated braking.

### Solution to Problem

The present inventors made an extensive research to achieve the above object, and completed the present invention by finding out that adjusting heat conductivity of a friction material improves durability of a back plate even if weight of the back plate is reduced, and can eventually improve durability of a friction member. The present invention was completed based on the above finding.

The present invention relates to [1] to [15] below.
[1] A friction member having a friction material disposed on one surface of a back plate comprising a material having a lower specific gravity than that of steel, wherein heat conductivity in a thickness direction of the friction material is 0.40 W/m·K or less.
[2] The friction member according to [1], wherein the heat conductivity in a thickness direction of the friction material is 0.35 W/m·K or less.
[3] A friction member having a friction material disposed through an interlayer on one surface of a back plate comprising a material having a lower specific gravity than that of steel, wherein heat conductivity in a thickness direction of at least one of the interlayer and the friction material is 0.40 W/m·K or less.
[4] The friction member according to [3], wherein the heat conductivity in a thickness direction of at least one of the interlayer and the friction material is 0.35 W/m·K or less.
[5] The friction member according to [3] or [4], wherein a thickness of the interlayer is 1 mm or more.
[6] The friction member according to any one of [1] to [5], wherein the specific gravity of the material comprised in the back plate is 5 Mg/m³ or less.
[7] The friction member according to any one of [1] to [6], wherein the back plate comprises at least one selected from the group consisting of (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy.
[8] The friction member according to [7], wherein the back plate comprises (1) the fiber-reinforced resin, wherein a reinforcement fiber of the fiber-reinforced resin is a glass fiber or a carbon fiber, and a resin of the fiber-reinforced resin is a thermosetting resin.
[9] The friction member according to any one of [1] to [8], wherein heat conductivity in a thickness direction of the back plate is 0.4 W/m·K or more.
[10] A friction member having a friction material disposed on one surface of a back plate, wherein the back plate comprises at least one selected from the group consisting of (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy, and heat conductivity in a thickness direction of the friction material is 0.40 W/m·K or less.
[11] The friction member according to [10], wherein the heat conductivity in a thickness direction of the friction material is 0.35 W/m·K or less.
[12] A friction member having a friction material disposed through an interlayer on one surface of a back plate, wherein the back plate comprises at least one selected from the group consisting of (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy, and heat conductivity in a thickness direction of at least one of the interlayer and the friction material is 0.40 W/m·K or less.
[13] The friction member according to [12], wherein the heat conductivity in a thickness direction of at least one of the interlayer and the friction material is 0.35 W/m·K or less.
[14] A disc brake pad comprising the friction member according to any one of [1] to [13].
[15] An automobile comprising the friction member according to any one of [1] to [13].

### Advantageous Effects of Invention

According to the present invention, a friction member (such as a disc brake pad) having light weight by reducing weight of a back plate and having improved durability after repeated braking can be provided. Further, because the specific gravity of the back plate is lower than that of steel, it contributes to a weight reduction of a car body of a two-wheeled vehicle, a four-wheeled automobile, and the like by reducing the weight of the friction member such as a disc brake pad.

### Brief Description of Drawings

[Fig. 1] Fig. 1 is a schematic diagram (top view) of a friction member (disc brake pad).
[Fig. 2] Fig. 2 is a schematic diagram of a cross-sectional view taken along a line A-A of the friction member (disc brake pad) in Fig. 1 having a friction material directly disposed on one surface of a back plate.
[Fig. 3] Fig. 3 is a schematic diagram of a cross-sectional view taken along a line A-A of the friction member (disc brake pad) in Fig. 1 having a friction material disposed through an interlayer on one surface of a back plate.

### Description of Embodiments

Hereinafter, the present invention will be described in detail. However, composing elements in the following embodiments are not essential unless explicitly stated. The same applies to values and their ranges, and the present invention is not limited to these values and ranges.

As for the numerical ranges described in the present specification, an upper limit or a lower limit of the numerical ranges may be replaced with the value given in Examples. Further, in this specification, a content of components in a friction material composition refers to a total content of a plural kinds of substances present in the friction material composition if the plural kinds of substances corresponding to the components are present unless otherwise specified.

Embodiments produced by combining any items described in this specification are also included in the present invention.

One embodiment of the present invention (first embodiment) when explaining by referring to, for example, Fig. 2 is a friction member having a friction material 2 disposed on one surface of a back plate 1 comprising a material having a lower specific gravity than that of steel, wherein heat conductivity in a thickness direction of the friction material 2 is 0.40 W/m·K or less.

Another embodiment of the present invention (second embodiment) when explaining by referring to, for example, Fig. 3 is a friction member having a friction material 2 disposed through an interlayer 3 on one surface of a back plate 1 comprising a material having a lower specific gravity than that of steel, wherein heat conductivity in a thickness direction of at least one of the interlayer 3 and the friction material 2 is 0.40 W/m·K or less.

In the present invention, the thickness direction refers to a direction from the surface of a friction material which is in sliding contact with a counterpart material toward a back plate, and the heat conductivity refers to heat conductivity measured by a temperature gradient method at room temperature (25°C). The temperature gradient method is a method for measuring heat conductivity of a sample based on a heat flux and a temperature of the sample when the sample that has been brought into contact with two objects each having a different temperature reaches a stationary state, and the heat conductivity measured by the temperature gradient method can be measured with a commercially available measurement device. Specific examples of the heat conductivity measured by the temperature gradient method include a heat conductivity measured by the method described in Examples.

The study conducted by the present inventors revealed that when braking is performed repeatedly, a brake temperature is increased due to frictional heat, a surface temperature of the friction material is brought to approximately 600°C or more in some cases, and especially when the friction material is worn away and a remaining thickness of the friction material becomes thin, a temperature of the back plate may increase to 200°C or more in some cases. The study further revealed that in a back plate formed of a fiber-reinforced resin among the lightweight materials, thermal decomposition of the resin is triggered when the temperature of the back plate goes beyond a heatproof temperature of the resin, and this causes a significant decrease in strength of the back plate and a defect such as generation of a crack and a fracture to be easily formed. In a back plate formed of a lightweight material such as an aluminum alloy, an aluminum composite, a magnesium alloy, or a magnesium composite, when the temperature reaches 200°C or more, strength and elasticity modulus of the back plate are decreased significantly, which is likely to result in a defect such as deformation and breakage. However, when the friction member described in the first or second embodiment is used, the temperature increase of the back plate 1 made of a lightweight material is prevented, and even when the surface temperature of the friction material is 600°C or more, a crack and a fracture can be prevented from forming on the back plate 1. Therefore, it becomes possible for the friction member to have a good balance of light weight and durability after repeated braking.

Hereinafter, the back plate and the friction material composing the friction member will be described in the mentioned order.

### [Back plate]

A back plate contains a material having a lower specific gravity than that of steel. In a preferred embodiment, the back plate is made of a material having a lower specific gravity than that of steel. The material having a lower specific gravity than that of steel is preferably a material having a specific gravity of 5 Mg/m³ or less, more preferably a material having a specific gravity of 3 Mg/m³ or less, and further preferably a material having a specific gravity of 2 Mg/m³ or less. Further, the specific gravity of the back plate is preferably 5 Mg/m³ or less, more preferably 3 Mg/m³ or less, and further preferably 2 Mg/m³ or less.

Examples of the material having a lower specific gravity than that of steel include (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy. That is, the back plate may contain at least one selected from the group consisting of the materials (1), (2-1), (2-2), (3-1), and (3-2), and may be made of at least one selected from the group consisting of the materials (1), (2-1), (2-2), (3-1), and (3-2).

### ((1) Fiber-reinforced resin)

A fiber-reinforced resin refers to a combined material of a fiber and a resin, or in other words, a composite of a fiber and a resin. The fiber-reinforced resin has a specific gravity of approximately 1 Mg/m³, and is thus suitable as a lightweight material.

As the fiber used for a fiber-reinforced resin, at least one selected from the group consisting of an inorganic fiber such as a glass fiber, an alumina fiber including an α-alumina fiber and a γ-alumina fiber, and a boron fiber; an aramid fiber such as a para-aramid fiber and a meta-aramid fiber; a cellulose fiber, a nanocellulose fiber, and a PBO (poly para-phenylenebenzoxazole) fiber, or a flameproof fiber and a carbon-based fiber such as a carbon fiber including a pitch carbon fiber and a PAN (polyacrylonitrile) carbon fiber can be used, for example. When these fibers are particularly used for the back plate, the glass fiber and the carbon fiber are preferably used in terms of strength and rigidity, and the carbon fiber is further preferably used in terms of high heat conductivity. Use of the carbon fiber allows the heat conductivity of the back plate to be further improved and allows a temperature distribution on the back plate to be even to prevent a local temperature increase when the brake temperature is increased due to frictional heat caused by repeated braking. Accordingly, cracks and fractures caused by the thermal decomposition and a decrease in strength of the resin are more likely to be prevented from forming on the back plate.

A fiber length of the fiber used for the fiber-reinforced resin is not limited to a particular length, and is preferably a fiber length of 1 mm or more, and further preferably a fiber length of 10 mm or more. An upper limit of the fiber length of the fiber is not limited to a particular length, and may be 100 mm or less, 70 mm or less, 50 mm or less, or 35 mm or less.

As the fiber used for the fiber-reinforced resin, a non-woven cloth such as a felt and even a woven cloth such as a paper-making product, a woven fabric made of continuous fibers, a knit fabric, and a union cloth can be used.

As the resin used for the fiber-reinforced resin, a thermosetting resin is preferred in terms of heat resistance, and a phenolic resin, an epoxy resin, and a polyimide resin are preferred in terms of heat resistance and strength. The phenolic resin and the epoxy resin are preferably used in combination with a curing agent. These resins used for the fiber-reinforced resin may be used alone or in combination of two or more. The phenolic resin can be a commercially available product and can be produced by synthesizing using an ordinary method.

Examples of the phenolic resin include a resol phenolic resin, a straight novolak phenolic resin, an aralkyl-modified phenolic resin, an elastomer-modified phenolic resin modified by acrylic elastomer or silicone elastomer. As the phenolic resin, the straight novolak phenolic resin and the resol phenolic resin are preferred in terms of heat resistance.

The epoxy resin can be a commercially available product and can be produced by synthesizing using an ordinary method. As the epoxy resin, an epoxy resin having an aromatic ring is preferred in terms of strength and heat resistance. Specifically, a phenol novolak epoxy resin, a cresol novolak epoxy resin, a naphthalene epoxy resin, and the like can be suitably used. In addition, an epoxy resin modified by silicone, acrylonitrile, butadiene, an isopropyl rubber, a polyamide resin, or the like can be used.

Further, in addition to the above-described fibers and resins, other additives can be blended in the fiber-reinforced resin. Examples of the additives include an inorganic filler, an organic filler, and metallic powder. The additives can be used alone or in combination of two or more. A particulate inorganic filler, organic filler, and metallic powder are preferred, and a particle size is preferably so low that particles are dispersed in a fiber aggregate. Specifically, examples of such additives include graphite, a molybdenum disulfide, a tungsten sulfide, a fluorine resin, and coke in terms of improving sliding properties, a magnesium hydroxide, an aluminum hydroxide, and an antimony compound in terms of improving flame resistance, hollow inorganic particles in terms of weight reduction, a calcium oxide, and a calcium hydroxide in terms of improving a curing rate of a resin, and metallic powder, graphite, a magnesium oxide, and a zinc oxide in terms of improving heat conductivity.

To prevent a local temperature increase of the back plate, heat conductivity in a thickness direction of the fiber-reinforced resin is preferably 0.4 W/m·K or more, more preferably 0.45 W/m·K or more, and further preferably 1.0 W/m·K or more. Examples of a method for keeping the heat conductivity in a thickness direction of the fiber-reinforced resin within the above range include a method in which an additive having high heat conductivity such as metallic powder, graphite, a magnesium oxide, and a zinc oxide is added to the fiber-reinforced resin, and a method in which a fiber having high heat conductivity such as a carbon fiber is used as a fiber for the fiber-reinforced resin. The fiber-reinforced resin produced by employing the above method alone or a combination of two or more methods can be used.

When the fiber-reinforced resin is used for the back plate, a fiber-reinforced resin-made back plate is produced by molding a fiber-reinforced resin and shaping the molded fiber-reinforced resin as necessary, and then, the produced fiber-reinforced resin-made back plate is used in place of a conventional steel back plate to produce the friction member. That is, a friction material composition that has been preformed as necessary is injected into a cavity of a thermoforming metal mold of a friction material, and the back plate made of the fiber-reinforced resin on which an adhesive is applied beforehand is then disposed so as to be in contact with the preformed product. The friction material is formed by subjecting the friction material composition to thermoforming, which allows the fiber-reinforced resin and the friction material to be integrated in one piece, thereby forming a friction member. According to the above process, thermoforming of the back plate made of the fiber-reinforced resin and thermoforming of the friction material are performed separately, which is not necessarily good in terms of energy efficiency. The energy efficiency can be improved by performing the thermoforming of the back plate made of the fiber-reinforced resin and the thermoforming of the friction material at the same time. That is, the fiber-reinforced resin that has not been thermally cured and the friction material composition that has been preformed as necessary are injected and subjected to thermoforming at the same time, so that a thermosetting resin in the fiber-reinforced resin and a thermosetting resin in the friction material are melted and cured during the thermosetting process, and are therefore integrated in one piece without an adhesive.

### (Aluminum, aluminum alloy)

Although aluminum is suitable as a lightweight material because of its low specific gravity of approximately 2.7 Mg/m³, an aluminum alloy is preferably used as a back plate in terms of strength. Examples of the aluminum alloy include a wrought aluminum alloy such as a 2XXX series (Al-Cu alloys), a 3XXX series (Al-Mn alloys), a 4XXX series (Al-Si alloys), a 5XXX series (Al-Mg alloys), a 6XXX series (Al-Mg-Si alloys), and a 7XXX series (Al-Zn alloys); a foundry aluminum alloy such as AC1C (Al-Cu alloys), AC1B (Al-Cu alloys), AC2A (Al-Cu-Si alloys), AC2B (Al-Cu-Si alloys), AC3A (Al-Si alloys), AC4A and AC4C (Al-Si-Mg alloys), AC4B (Al-Si-Cu alloys), AC4D (Al-Si-Cu-Mg alloys), AC5A (Al-Cu-Ni-Mg alloys), AC7A (Al-Mg alloys), AC8A (Al-Si-Cu-Ni-Mg alloys), AC8B (Al-Si-Cu-Ni-Mg alloys), AC9A (Al-Si-Cu-Mg alloys), and AC9B (Al-Si-Cu-Mg alloys); and a die-cast aluminum alloy such as ADC1 (Al-Si alloys), ADC3 (Al-Si-Mg alloys), ADC5 (Al-Mg alloys), ADC6 (Al-Mg-Mn alloys), ADC10 (Al-Si-Cu alloys), ADC12 (Al-Si-Cu alloys), and ADC14 (Al-Si-Cu-Mg alloys). In addition, thermally refined alloys produced by subjecting the above alloys to a heat treatment (aging treatment) can be used.

### (Aluminum composite)

An aluminum composite in which ceramic particles are dispersed in aluminum or the above aluminum alloy (ceramic particle-reinforced aluminum-based composite material) has higher Young's modulus than that of an aluminum alloy. For that reason, use of the aluminum composite as a back plate can increase rigidity of a brake pad, and is thus suitable. Examples of dispersion-strengthened ceramic particles include an oxide ceramic such as Al₂O₃, TiO₂, SiO₂, and ZrO₂, a carbide ceramic such as SiC and TiC, and a nitride ceramic such as TiN.

### (Magnesium, magnesium alloy)

Although magnesium is suitable as a lightweight material because of its low specific gravity of approximately 1.74 Mg/m³, a magnesium alloy is preferably used as a back plate in terms of strength. Examples of the magnesium alloy include various casting magnesium alloys such as M1 (Mg-Mn alloy), AZ alloys (Mg-Al-Zn alloy) such as AZ61 and AZ91, ZK alloys (Mg-Zn-Zr alloy) such as ZK51 and ZK60, ZH alloys (Mg-Zn-Zr alloy) such as ZH62, EK alloys (Mg-Rare earth element alloy) such as EK30, HK alloys (Mg-Th alloys) such as HK31, and K1 (Mg-Zr alloy), and magnesium alloys for processing. Further, a flame-resistant magnesium alloy containing a few percent of calcium can be used.

### (Magnesium composite)

A magnesium composite in which ceramic particles are dispersed in magnesium or the above magnesium alloy (ceramic particle-reinforced magnesium-based composite material) has higher Young's modulus than that of a magnesium alloy. For that reason, use of the aluminum composite as a back plate can increase rigidity of a brake pad, and is thus suitable. Examples of dispersion-strengthened ceramic particles include an oxide ceramic such as Al₂O₃, TiO₂, SiO₂, and ZrO₂, a carbide ceramic such as SiC and TiC, and a nitride ceramic such as TiN.

An increase in the heat conductivity in a thickness direction of the back plate allows a temperature distribution on the back plate to be even to prevent a local temperature increase when the brake temperature is increased due to frictional heat caused by repeated braking. Accordingly, cracks and fractures caused by the thermal decomposition and a decrease in strength of a resin are more likely to be prevented from forming on the back plate. For that reason, the heat conductivity in a thickness direction of the back plate is preferably 0.4 W/m·K or more, more preferably 0.45 W/m·K or more, and further preferably 1.0 W/m·K or more. An upper limit of the heat conductivity in a thickness direction of the back plate is not limited to particular heat conductivity, and may be 400 W/m·K or less or 250 W/m·K or less.

### [Friction material]

A preferred embodiment of the friction material is, for example, a friction material formed of a friction material composition containing a bonding material, an organic filler, an inorganic filler, and a fibrous base material. The friction material composition or a preformed product of the friction material composition is stacked on the back plate, which is subjected to hot pressing molding, followed by a heat treatment to cure a thermosetting resin as a bonding material, thereby forming a friction material.

When the first embodiment is explained by referring to Fig. 2, heat conductivity in a thickness direction of a friction material 2 is 0.40 W/m·K or less, and preferably 0.35 W/m·K or less. A lower limit of the heat conductivity in a thickness direction of the friction material 2 is not limited to particular heat conductivity, and may be 0.05 W/m·K or more or 0.1 W/m·K or more.

When the second embodiment is explained by referring to Fig. 3, heat conductivity in a thickness direction of at least one of an interlayer 3 as described below and the friction material 2 is 0.40 W/m·K or less, and preferably 0.35 W/m·K or less. A lower limit of the heat conductivity is not limited to particular heat conductivity, and may be 0.05 W/m·K or more or 0.1 W/m·K or more.

Examples of a method for keeping the heat conductivity in a thickness direction of the friction material within the range of, for example, 0.40 W/m·K or less (preferably 0.35 W/m·K or less) include (A) a method for increasing porosity of a friction material, (B) a method for reducing a content of materials having high heat conductivity such as graphite and a metallic fiber in a friction material, and (C) a method for increasing a content of a resin in a friction material. These methods are used alone or in combination of two or more to produce a friction material of 0.40 W/m·K or less (preferably 0.35 W/m·K or less).

A thickness of the friction material is preferably 4 to 15 mm, more preferably 6 to 15 mm, and further preferably 7 to 13 mm, in terms of durability.

### [Interlayer]

When the second embodiment is explained by referring to Fig. 3, the friction material 2 is formed on the back plate through the interlayer 3. A preferred embodiment of the interlayer 3 is a friction material formed of a friction material composition containing a bonding material, an organic filler, an inorganic filler, and a fibrous base material. When the friction material 2 is firmly fixed to the back plate 1 through the interlayer 3, the interlayer 3 is formed by stacking a friction material composition and an interlayer composition or a preformed product of the friction material composition and the interlayer composition on the back plate 1, which is subjected to hot press molding, followed by a heat treatment to cure a thermosetting resin as a bonding material.

As described above, the heat conductivity in a thickness direction of at least one of the interlayer 3 and the friction material 2 is not limited to particular heat conductivity as long as it is 0.40 W/m·K or less (preferably 0.35 W/m·K or less). However, when the heat conductivity in a thickness direction of the friction material 2 is 0.40 W/m·K or less, there is no particular limitation on the heat conductivity in a thickness direction of the interlayer 3. On the other hand, when the heat conductivity in a thickness direction of the friction material 2 is more than 0.40 W/m·K, the heat conductivity in a thickness direction of the interlayer 3 is set to 0.40 W/m·K or less (preferably 0.35 W/m·K or less). By doing this, even when a surface temperature of the friction material is 600°C or more, a crack and a fracture can be prevented from forming on the back plate and the friction member thus has excellent durability. It is assumed that the foregoing is achieved because a temperature increase of the back plate made of a lightweight material is prevented efficiently.

Examples of a method for keeping the heat conductivity in a thickness direction of the interlayer 3 within the range of, for example, 0.40 W/m·K or less (preferably 0.35 W/m·K or less) include (A) a method for increasing porosity of a friction material, (B) a method for reducing a content of materials having high heat conductivity such as graphite and a metallic fiber in an interlayer, and (C) a method for increasing a content of a resin in an interlayer. These methods are used alone or in combination of two or more to produce an interlayer of 0.40 W/m·K or less (preferably 0.35 W/m·K or less).

A thickness of the interlayer is preferably 1 mm or more. When the heat conductivity in a thickness direction of the interlayer 3 is 0.40 W/m·K or less, setting the thickness of the interlayer to 1 mm or more allows an insulation between the friction material and the back plate to improve and allows a crack and a fracture to be efficiently prevented from forming on the back plate. The thickness of the interlayer is more preferably 1 to 5 mm, further preferably 1 to 3 mm, and particularly preferably 1 to 2 mm.

It is preferred that the back plate 1 contains a fiber-reinforced resin, and a combination of chemical components that can mutually form a chemical bond between a thermosetting resin contained in the friction material 2 and a thermosetting resin used for the back plate 1 by thermosetting is used. By using these materials, the back plate 1 and the friction material 2 can be integrally molded by hot pressing without using an adhesive, which is thus preferred in terms of not only improving strength and toughness of a brake pad but also simplifying a production process.

Further, it is preferred that the back plate 1 contains a fiber-reinforced resin, and a combination of chemical components that can mutually form a chemical bond between a thermosetting resin contained in the friction material 2 and the interlayer 3 and a thermosetting resin used for the back plate 1 by thermosetting is used. By using these materials, the back plate 1, the interlayer 3, and the friction material 2 can be integrally molded by hot pressing without using an adhesive, which is thus preferred in terms of not only improving strength and toughness of a brake pad but also simplifying a production process.

Moreover, when the back plate 1 contains an aluminum alloy containing Cu, Zn, and the like, or an aluminum composite containing such an aluminum alloy as a base material, an aging precipitation treatment can be performed at the same time with the hot press molding and the heat treatment. This is preferred in terms of not only improving strength of the brake pad but also simplifying a production process.

### [Automobile]

The present invention also provides an automobile comprising the friction member of the present invention. Examples thereof include an automobile in which the friction member of the present invention is used for a disc brake pad, a brake lining, a clutch facing, an electromagnetic brake, a holding brake, or the like. Examples of the automobile include a large automobile, a medium automobile, a standard-sized automobile, a large special-purpose vehicle, a small special-purpose vehicle, a large motorcycle, and a standard-sized motorcycle.

### Examples

Hereinafter, the present invention will be described in detail with reference to Examples. However, the present invention is not limited to these Examples.

### Examples 1 to 6, Comparative Examples 1 to 4, and Reference Example 1

The disc brake pad having a structure shown in Table 1 was prepared.

A friction material A was a commonly used non-asbestos organic material (HP63H, manufactured by Hitachi Chemical Company, Ltd.) used for an automobile.

Using the HP63H as a base material, friction materials B, C, D, and E were produced by removing a metallic material contained therein, reducing weight of graphite, and further, adjusting a production condition (thermoforming condition). Accordingly, these friction materials were produced by reducing packing density of materials having high heat conductivity. An interlayer A laid between the friction material and the back plate was made of the same material as that of the friction material B.

To measure heat conductivity, a measurement sample was prepared by molding a friction material and an interlayer independently from each other and then cutting them into a columnar shape having a diameter of 50 mm and a thickness of 2 mm. A bottom surface of the prepared measurement sample was sandwiched by two metallic columns, and the measurement was performed under atmospheric pressure at room temperature (25°C) using a temperature gradient method (heat conductivity measurement device "ARC-TC-1" manufactured by AGNE Gijutsu Center Inc.). At this time, a temperature difference between the two metallic columns which were in contact with the sample was 13 to 20°C and an average temperature was 25°C.

The followings are the materials of the back plate used in each Example described in Table 1.
Steel: SAPH400
Al alloy (aluminum alloy): ADC12
CFRP: A phenolic resin composited with a carbon fiber of 25 mm (carbon fibers: 50 mass%)
GFRP: A phenolic resin composited with a glass fiber of 25 mm (glass fibers: 50 mass%)

### (Durability test on back plate during repeated braking)

A brake dynamometer test was conducted using a disc brake pad of each Example prepared as above, and durability of the back plate was evaluated. In the evaluation, a commonly used pin slide-type colette caliper and a ventilated disc rotor were used at an inertia of 7 kgf·m·s². After a brake temperature was repeatedly increased to 600°C for 50 times by performing repeated braking for 50 times at a vehicle speed of 65 km/h and a deceleration of 0.35 G, the back plate portion was checked for defects (breakage, deformation, and crack) in appearance and was evaluated in accordance with the following evaluation criteria. Further, a temperature of the back plate was measured with a thermocouple implanted in the back plate. The evaluation results are shown in Table 1.
a: No breakage, no deformation of more than 1 mm, and no formation of a crack on the back plate portion.
b: Although breakage and deformation of more than 1 mm were not observed, formation of a crack was observed on the back plate portion.
c: Breakage or deformation of more than 1 mm was observed on the back plate portion.

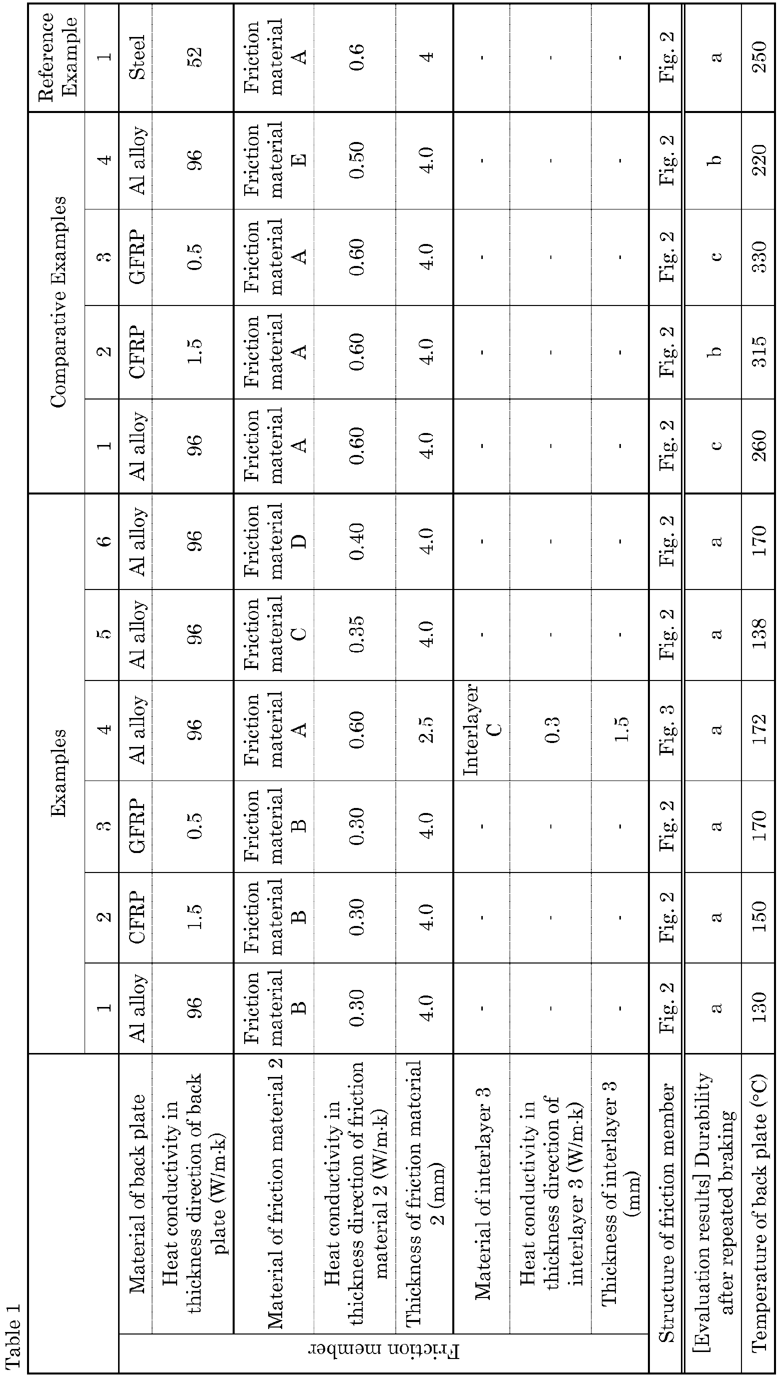

According to Examples 1 to 6 in Table 1, the disc brake pad in which a lightweight material having poor heat resistance was used for the back plate and a friction material having heat conductivity in a thickness direction of 0.40 W/m·K or less was used and the disc brake pad in which the interlayer having heat conductivity in a thickness direction of 0.40 W/m·K or less was laid show that the temperature of the back plate is not increased even after repeated braking, and these disc brake pads show durability equivalent to that of the conventional product having a back plate made of a steel plate (Reference Example 1). The results of Examples 1 to 6 show an improvement in durability as compared to Comparative Examples 1 to 4 in which a lightweight material having poor heat resistance was used for a back plate and a friction material having heat conductivity in a thickness direction of more than 0.40 W/m·K was used in combination with the back plate.

Further, when comparing Example 5 in which a friction material having heat conductivity in a thickness direction of 0.35 W/m·K and Example 6 in which a friction material having heat conductivity in a thickness direction of 0.40 W/m·K was used, Example 5 shows a significant temperature decrease in the back plate after repeated braking, and the advantageous effects of the present invention are more prominently visible in Example 5. When comparing Examples 1, 5, and 6, a difference in the results of Example 5 and Example 6 is larger than a difference in the results of Example 1 and Example 5. Thus, it can be deemed that there is also a critical meaning for use of a friction material having heat conductivity in a thickness direction of 0.35 W/m·K or less.

In Example 2 in which the fiber-reinforced resin having heat conductivity in a thickness direction of 1.0 W/m·K or more was used for the back plate, a temperature increase of the back plate was prevented more satisfactorily than that in Example 3 in which the fiber-reinforced resin having heat conductivity in a thickness direction of less than 1.0 W/m·K was used. Thus, it is considered that Example 2 has superior durability during repeated braking.

Mass of the steel back plate in a sample disc brake pad of Reference Example 1 was 250 g. However, mass of the back plate in sample disc brake pads of the present invention (Examples 1 to 4) was 60 to 100 g. Therefore, if the disc brake pad of the present invention is used in place of the conventional disc brake pad, a mass reduction of 150 to 190 g per disc brake pad can be achieved.

### Industrial Applicability

The friction member of the present invention has a small temperature increase in the back plate even when braking is performed repeatedly, has practical durability, is light in weight, and is therefore suitable for a disc brake pad used in braking of a two-wheeled vehicle or a four-wheeled vehicle.

### Reference Signs List

- 1: Back plate
- 11: Surface of back plate on which friction material is disposed
- 12: The other surface of back plate
- 2: Friction material
- 3: Interlayer

## Claims

1. A friction member having a friction material disposed on one surface of a back plate comprising a material having a lower specific gravity than that of steel,
wherein heat conductivity in a thickness direction of the friction material is 0.40 W/m·K or less.

2. The friction member according to claim 1, wherein the heat conductivity in a thickness direction of the friction material is 0.35 W/m·K or less.

3. A friction member having a friction material disposed through an interlayer on one surface of a back plate comprising a material having a lower specific gravity than that of steel,
wherein heat conductivity in a thickness direction of at least one of the interlayer and the friction material is 0.40 W/m·K or less.

4. The friction member according to claim 3, wherein the heat conductivity in a thickness direction of at least one of the interlayer and the friction material is 0.35 W/m·K or less.

5. The friction member according to claim 3 or 4, wherein a thickness of the interlayer is 1 mm or more.

6. The friction member according to any one of claims 1 to 5, wherein the specific gravity of the material comprised in the back plate is 5 Mg/m³ or less.

7. The friction member according to any one of claims 1 to 6, wherein the back plate comprises at least one selected from the group consisting of (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy.

8. The friction member according to claim 7, wherein the back plate comprises (1) the fiber-reinforced resin, wherein a reinforcement fiber of the fiber-reinforced resin is a glass fiber or a carbon fiber, and a resin of the fiber-reinforced resin is a thermosetting resin.

9. The friction member according to any one of claims 1 to 8, wherein heat conductivity in a thickness direction of the back plate is 0.4 W/m·K or more.

10. A friction member having a friction material disposed on one surface of a back plate,
wherein the back plate comprises at least one selected from the group consisting of (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy, and
heat conductivity in a thickness direction of the friction material is 0.40 W/m·K or less.

11. The friction member according to claim 10, wherein the heat conductivity in a thickness direction of the friction material is 0.35 W/m·K or less.

12. A friction member having a friction material disposed through an interlayer on one surface of a back plate,
wherein the back plate comprises at least one selected from the group consisting of (1) a fiber-reinforced resin, (2-1) an aluminum alloy, (2-2) an aluminum composite in which ceramic particles are dispersed in aluminum or an aluminum alloy, (3-1) a magnesium alloy, and (3-2) a magnesium composite in which ceramic particles are dispersed in magnesium or a magnesium alloy, and
heat conductivity in a thickness direction of at least one of the interlayer and the friction material is 0.40 W/m·K or less.

13. The friction member according to claim 12, wherein the heat conductivity in a thickness direction of at least one of the interlayer and the friction material is 0.35 W/m·K or less.

14. A disc brake pad comprising the friction member according to any one of claims 1 to 13.

15. An automobile comprising the friction member according to any one of claims 1 to 13.
